# EUROPEAN PATENT SPECIFICATION

(11) **EP 3 123 978 B1**
(45) Date of publication and mention of the grant of the patent: **18.09.2019**
(21) Application number: 15769937.2
(22) Date of filing: 25.03.2015
(51) Int. Cl.: A61C 17/22, A61C 17/34, A61C 17/20

(54) **ELECTRICALLY DRIVEN TOOTHBRUSH**
ELEKTRISCH ANGETRIEBENE ZAHNBÜRSTE
BROSSE À DENTS À ENTRAÎNEMENT ÉLECTRIQUE

(30) Priority: 28.03.2014 JP 2014068289
(43) Date of publication of application: 01.02.2017
(73) Proprietor: SUNSTAR INC., Takatsuki-shi, Osaka 569-1195 (JP)
(72) Inventor: WADA Yukinori, Takatsuki-shi Osaka 569-1195 (JP); NISHIURA Masahiro, Takatsuki-shi Osaka 569-1195 (JP)
(74) Representative: Vossius & Partner Patentanwälte Rechtsanwälte mbB
(86) International application number: PCT/JP2015/059118
(87) International publication number: WO 2015/147054

(56) References cited:
- WO-A1-2012/120741
- CN-U- 203 029 417
- JP-A- H0 750 319
- JP-A- 2000 175 745
- JP-A- 2002 199 923
- JP-A- 2004 319 376
- US-A- 3 060 474
- US-A- 3 060 474
- US-A1- 2005 189 000
- US-A1- 2011 047 729
- US-A1- 2011 081 624

## Description

### Technical Field

The present invention relates to an electrically driven toothbrush that can be preferably used for an electrically driven toothbrush in which cleaning power of manual brushing is reinforced by electric cleaning power.

### Background Art

There are widely used a linear motion-type electrically driven toothbrush including a conversion means for converting a rotational motion of a motor into a reciprocating linear motion of a brush part, an inversion motion-type electrically driven toothbrush including a conversion means for converting a rotational motion of a motor into a reciprocating inversion motion of a brush part, a linear vibration-type electrically driven toothbrush that causes a brush part to be reciprocated and vibrated directly by a linear actuator, a weight rotation vibration-type electrically driven toothbrush that causes a weight-type movement to be rotated by a motor to vibrate indirectly a brush part, a weight linear vibration-type electrically driven toothbrush that causes a weight-type movement to be reciprocated by a linear actuator to vibrate indirectly a brush part, and others.

In addition, there is proposed an electrically driven toothbrush in which a handle part is formed by installing an interior member with drive parts such as a motor and a battery in a cylindrical bottomed exterior case, and fitting and fixing an annular lid member to the exterior case such that an attachment shaft for replacement brush provided in the interior member protrudes to the outside, thereby integrating the interior member into the exterior case (for example, refer to Patent Document 1).

US 2011/047729 A1 relates to an electric toothbrush that includes a cylindrical case corresponding to a portion gripped by a hand during toothbrushing, a vibration body, and a brush part attached to vibration body.

### Citation List

### Patent Literature

Patent Document 1: JP-A No. 2012-183219

### Summary of Invention

### Technical Problem

The linear motion-type, inverse motion-type, or linear vibration-type electrically driven toothbrush provides a strong brushing power by an electric motor. However, they are complicated in structure and inevitably have thick handle parts and heavy brush parts. In particular, with a plurality of vibration modes, the electrically driven toothbrush also has a complicated switch part. In addition, since the switch is to be operated while holding the toothbrush by hand, the switch needs to be positioned on the periphery of the handle part, and thus the handle part becomes thicker and the toothbrush may further become heavier. The toothbrush with a thick handle part or the entirely heavy toothbrush is hard to hold firmly and continuously for children and women with small hands, or children, elderly people, or sick people with a weak grip or a low physical endurance. Accordingly, such people cannot take a sufficient time for brushing the teeth and may be in unfavorable oral cleaning state in spite of brushing the teeth.

Meanwhile, in the case of a manual toothbrush, the cleaning performance of the toothbrush is significantly influenced by physical force during motions of filament bristles back and forth on tooth surfaces or the like. Accordingly, to clean the teeth effectively, it is preferred to move the bristles back and forth on a portion to be cleaned, and it is thus necessary to learn an appropriate brushing technique for achieving the effective clean state. However, many people actually brush their teeth in their own ways according to their preferences. Brushing continuously the teeth by excessive power for a long time may cause the problem of scraping off the teeth and gums. Without appropriate brushing technique, longer-time brushing is required to perform a sufficient oral cleaning. In this case, children, elderly people, sick people, and pregnant women may not clean their teeth sufficiently because they may not be able to open their mouths for a long time for brushing of teeth. Further, children, elderly people, and sick people having difficulty in self-dental care require a further higher teeth-brushing technique for oral cleaning by themselves or helpers. However, only a few of these people have such a technique, and thus children, elderly people, and sick people having difficulty in self-dental care are likely to perform an insufficient oral cleaning. It is known that an insufficient oral cleaning may cause not only dental illnesses such as dental caries and periodontal disease but also systemic illnesses such as aspiration pneumonia and early miscarriage. Accordingly, it is a major issue to perform a sufficient oral cleaning in a short time for people in need of care, elderly people, and pregnant women in particular.

It is conventionally difficult to provide an electrically driven toothbrush with a sufficiently thin brush main body including a handle part because, for widely moving a brush part (with filaments implanted) vertically or rotationally, it is necessary to provide a mechanical part to transfer the motor's rotational power directly to the brush part or supply motion energy for driving the brush part, and thus there is limitation on the size reduction of the motor. Meanwhile, the weight vibration-type electrically driven toothbrushes are configured to vibrate the entire toothbrush by rotating a weight-type movement using power of a rotary motor or reciprocating a weight-type movement with a linear motor, and have been recently gaining popularity among young women because these toothbrushes are simple in structure, have a slim and smart handle part, and are capable of being put into their handbags or pochettes. However, the weight vibration-type electrically driven toothbrush obtains a mechanical cleaning power by transferring centroid fluctuations resulting from rotation and reciprocation of a weight-type movement to the brush part, and thus cannot provide a sufficient cleaning power because the motion energy given to the brush part is significantly smaller than that in a general electrically driven toothbrush in which the toothbrush head part is moved by physical binding to the motor driving part.

In view of such circumstances, the inventor of the present invention has earnestly studied on development of a power-assisted toothbrush that assists manual brushing, based on the idea that the weight vibration-type electrically driven toothbrush or the like with a thin and slim handle part producing a weak brushing power could be improved to produce a sufficient brushing power as a whole by making the handle part thinner to be close to the thickness of the handle part of a manual toothbrush to produce sufficient ease of a manual brushing action, and by providing an electrical assistance in the case where sufficient cleaning power cannot be given only by a manual brushing action.

In addition, the exterior case of the handle part as a handle is generally formed from a synthetic resin material because it allows low-cost manufacture and has a high degree of freedom for designing. However, when the exterior case is formed from a synthetic resin material, the handle part inevitably becomes thick to ensure strength and rigidity. In addition, the exterior case may be formed from a metallic material to enhance the strength and rigidity of the exterior case and allow the handle part to be made thin and slim. However, when the wall-thickness of the exterior case is decreased for weight reduction, it is not possible to form a screw portion directly in the exterior case. Accordingly, it is necessary to perform roll threading or the like to form the screw portion. The screw portion is exposed to the outside to deteriorate in outer appearance. The lid member may be provided to cover the exposed screw portion. In that case, however, the outer diameter of the end portion of the handle part inevitably becomes large due to the lid member. The lid member deteriorates in the design and operability of the electrically driven toothbrush. In addition, when the exterior case is formed from a metallic material, magnetic flux is interrupted and non-contact electric charging is difficult with the use of an induction coil.

An object of the present invention is to provide an electrically driven toothbrush in which a metallic cylindrical exterior case is used and formed without formation of a screw portion therein to make a handle part thin and slim to improve operability and design and an induction coil is assembled into an interior member protruding outward from the exterior case to allow non-contact electric charging.

### Solution to Problem

A first electrically driven toothbrush according to the present invention is an electrically driven toothbrush in which a replacement brush is detachably attached to a handle part as a handle, wherein the handle part includes: a metallic cylindrical exterior case that has a first end portion and a second end portion; an interior member that has a small end portion inserted into the first end portion and a large end portion locked at the second end portion, and is installed in the exterior case by inserting the small end portion into the exterior case from the second end portion side; a restriction member that is fitted and fixed onto the small end portion protruding outward from the first end portion via a coupling structure and is engaged with the first end portion of the exterior case to restrict falling of the exterior case from the interior member in conjunction with the large end portion; and a vibration generation means that is assembled into the interior member to vibrate the replacement brush.

In the handle part of the first electrically driven toothbrush, the small end portion of the interior member is inserted into the exterior case from the second end portion side, the large end portion of the interior member is locked at the second end portion of the exterior case, and the restriction member is fitted and fixed onto the small end portion of the interior member protruding outward from the first end portion of the exterior case via the coupling structure. Accordingly, the exterior case and the interior member can be integrally coupled without formation of a screw part in the exterior case. Since there is no need to form the screw part in the exterior case, it is possible to use a metallic thin-walled cylindrical member for the exterior case while reliably preventing deterioration of design by the screw part. It is also possible to make the handle member lightweight, thin, and slim as compared to the case where the exterior case is formed from a synthetic resin material. In addition, as the vibration generation means, a relatively low-power and compact weight vibration-type vibration generation means such as a weight rotation vibration type or a weight linear vibration type can be employed to make the handle part of the electrically driven toothbrush still thinner and slimmer to enhance the ease of manual brushing although an electric brushing power is reduced, thereby providing sufficient brushing performance of the electrically driven toothbrush as a whole. Accordingly, it is possible to realize the electrically driven toothbrush that is easy to grip and use, and excellent in brushing performance even for children and women with small hands, and children, elderly people, and sick people with a weak grip or a low physical endurance. In addition, the large end portion of the interior member and the restriction member can be configured so as not to protrude outward in a radial direction beyond the exterior case, thereby achieving the electrically driven toothbrush of a neat and excellent design with few irregularities.

As the coupling structure, a concave-convex fitting portion may be formed between the restriction member and the small end portion or a screw portion may be provided between the restriction member and the small end portion.

It is preferred to form at the first end portion of the exterior case a held portion that extends inward and is held between the restriction member and the interior member. According to this configuration, the exterior case can be fixed to the interior member at the first end portion side. This makes it possible to eliminate the play between the exterior case and the interior member to enhance water-tightness of the handle part, prevent the occurrence of noise due to backlash, and prevent effectively the formation of rust at the first end portion of the exterior case.

It is preferred to provide the small end portion with an attachment shaft for detachably attaching the replacement brush such that an outer surface of the restriction member is continuously connected to an outer surface of the first end portion of the exterior case, or provide the large end portion with an attachment shaft for detachably attaching the replacement brush such that an outer surface of the large end portion is continuously connected to an outer surface of the second end portion of the exterior case. According to this configuration, it is possible to realize the electrically driven toothbrush of a neat and excellent design with few irregularities on the outer surface of the handle part.

It is preferred to form an end portion of the interior member opposite to the attachment shaft from a synthetic resin material pervious to magnetic flux, and provide an induction coil for non-contact electric charging at the opposite end portion. According to this configuration, it is possible to perform non-contact electric charging by the induction coil while using the metallic exterior case.

It is preferred to use the vibration generation means that includes a weight-type movement and an actuator rotating or reciprocating the weight-type movement. The electrically driven toothbrush of the present invention is applicable to linear motion-type, inversion motion-type, and linear vibration-type electrically driven toothbrushes, but is particularly suited to a weight rotation vibration-type electrically driven toothbrush including a motor and a weight-type movement eccentrically rotated by the motor and a weight linear vibration-type electrically driven toothbrush that includes a linear actuator and a weight-type movement reciprocated by the linear actuator and is configured to transfer vibration transferred to the casing to the brush part. That is, in weight rotation vibration-type and weight linear vibration-type electrically driven toothbrushes, the vibration is also transferred to the toothbrush main body and inevitably becomes weak at the brush part, but the motor and the linear actuator can be made compact. Accordingly, it is possible to make the handle part of the electrically driven toothbrush thin and slim to realize the electrically driven toothbrush preferably suited to manual brushing. Specifically, employing a weight rotation vibration-type or weight linear vibration-type electrically driven toothbrush makes it possible to set the outer diameter of the handle part to 8 to 18 mm, preferably 8 to 15 mm, more preferably 8 to 12 mm. According to this configuration, it is possible to provide sufficient ease of manual brushing with the handle part held by hand.

A second electrically driven toothbrush of the present invention is an electrically driven toothbrush in which a replacement brush is detachably attached to a handle part as a handle, wherein the handle part includes: a metallic exterior case that has a first end portion and a second end portion and has a held portion extending inward at the first end portion; an interior member that has a small end portion inserted into the first end portion and is installed in the exterior case by inserting the small end portion into the exterior case from the second end portion side; a restriction member that is fitted and fixed onto the small end portion protruding outward from the first end portion via a coupling structure and holds the held portion of the first end portion extending between the restriction member and the interior member to restrict falling of the exterior case from the interior member; a vibration generation means that is assembled into the interior member to vibrate the replacement brush; an attachment shaft that is provided at the small end portion to detachably attach the replacement brush; and a lid member that closes the second end portion.

In the handle part of the second electrically driven toothbrush, the small end portion of the interior member is inserted into the exterior case from the second end portion side, the restriction member is fitted and fixed onto the small end portion of the interior member protruding outward from the first end portion of the exterior case via the coupling structure, and the held portion of the first end portion extending between the restriction member and the interior member is held. Accordingly, it is possible to detachably attach the replacement brush and integrally couple the exterior case and the interior member without formation of a screw portion at least on the first end portion side of the exterior case. Meanwhile, the second end portion of the exterior case is closed by the lid member, and therefore the lid member is larger in diameter than the exterior case. This may result in deterioration of the outer appearance of the handle part, but the first end portion side of the exterior case exerting influence on ease of brushing can be made thin and slim. In addition, as the vibration generation means, a relatively low-power and compact weight vibration-type vibration generation means such as a weight rotation vibration type or a weight linear vibration type can be employed to make the handle part of the electrically driven toothbrush still thinner and slimmer to enhance the ease of manual brushing although an electric brushing power is reduced, thereby providing sufficient brushing performance of the electrically driven toothbrush as a whole. Accordingly, it is possible to realize the electrically driven toothbrush that is easy to grip and use, and excellent in brushing performance even for children and women with small hands, and children, elderly people, and sick people with a weak grip or a low physical endurance. In addition, the restriction member of the interior member can be configured so as not to protrude outward in a radial direction beyond the exterior case, thereby achieving the electrically driven toothbrush of a neat and excellent design with few irregularities.

In the second electrically driven toothbrush as well as the first electrically driven toothbrush, as the coupling structure, a concave-convex fitting portion may be formed between the restriction member and the small end portion or a screw portion may be provided between the restriction member and the small end portion. In addition, the outer surface of the restriction member may be continuously connected to the outer surface of the first end portion of the exterior case, the end portion of the interior member opposite to the attachment shaft and the lid member may be formed from a synthetic resin material pervious to magnetic flux, an induction coil for non-contact electric charging may be provided at the opposite end portion or the lid member, or the vibration generation means may include a weight-type movement and an actuator rotating and reciprocating the weight-type movement.

### Advantageous Effects of Invention

According to the first and second electrically driven toothbrushes of the present invention, the handle member can be made lightweight, thin, and slim as compared to the case in which the exterior case is formed from a synthetic resin material. In addition, as the vibration generation means, a relatively low-power and compact weight vibration-type vibration generation means such as a weight rotation vibration type or a weight linear vibration type can be employed to make the handle part of the electrically driven toothbrush still thinner and slimmer to enhance the ease of manual brushing although an electric brushing power is reduced, thereby providing sufficient brushing performance of the electrically driven toothbrush as a whole. Accordingly, it is possible to realize the electrically driven toothbrush that is easy to grip and use, and excellent in brushing performance even for children and women with small hands, and children, elderly people, and sick people with a weak grip or a low physical endurance. In addition, the large end portion of the interior member and the restriction member can be configured so as not to protrude outward in a radial direction beyond the exterior case, thereby achieving the electrically driven toothbrush of a neat and excellent design with few irregularities.

### Brief Description of the Drawings

Fig. 1(a) is a schematic explanatory diagram of a first electrically driven toothbrush, and Fig. 1(b) is a schematic explanatory diagram of the first electrically driven toothbrush in another configuration;
Fig. 2(a) is a schematic configuration diagram of a second electrically driven toothbrush, and Figs. 2(b) and 2(c) are schematic explanatory diagrams of closing structures for second end portions in other configurations;
Fig. 3 is a schematic configuration diagram of an electrically driven toothbrush including a vibration generation means in another configuration;
Fig. 4(a) is a vertical cross-sectional view of an electrically driven toothbrush, and Fig. 4(b) is a cross-sectional view of Fig. 4(a) taken along line IV-IV;
Fig. 5 is a vertical cross-sectional view of a coupling structure of an exterior case and an upper end portion of an interior member and its neighborhood;
Fig. 6 is a cross-sectional view of Fig. 5 taken along line VI-VI;
Fig. 7 is a vertical cross-sectional view of a coupling structure and its neighborhood in another configuration;
Fig. 8(a) is a perspective view of a coupling structure in another configuration, Fig. 8(b) is a transverse cross-sectional view of a coupling state, and Fig. 8(c) is a transverse cross-sectional view of a state immediately before coupling;
Fig. 9(a) is a perspective view of a lower structure of another electrically driven toothbrush, and Fig. 9(b) is a vertical cross-sectional view of the same;
Fig. 10(a) is a perspective view of a lower structure of another electrically driven toothbrush, and Fig. 10(b) is a vertical cross-sectional view of the same;
Fig. 11(a) is a perspective view of a lower structure of another electrically driven toothbrush, and Fig. 11(b) is a vertical cross-sectional view of the same; and
Fig. 12(a) is a perspective view of a lower structure of another electrically driven toothbrush, and Fig. 12(b) is a vertical cross-sectional view of the same.

### Description of Embodiments

Embodiments for carrying out the present invention will be explained with reference to the drawings.

Electrically driven toothbrushes of the present invention are characterized by an assembly structure of an exterior case and an interior member, and are roughly divided into two types of electrically driven toothbrushes including the following assembly structures:

### (First electrically driven toothbrush)

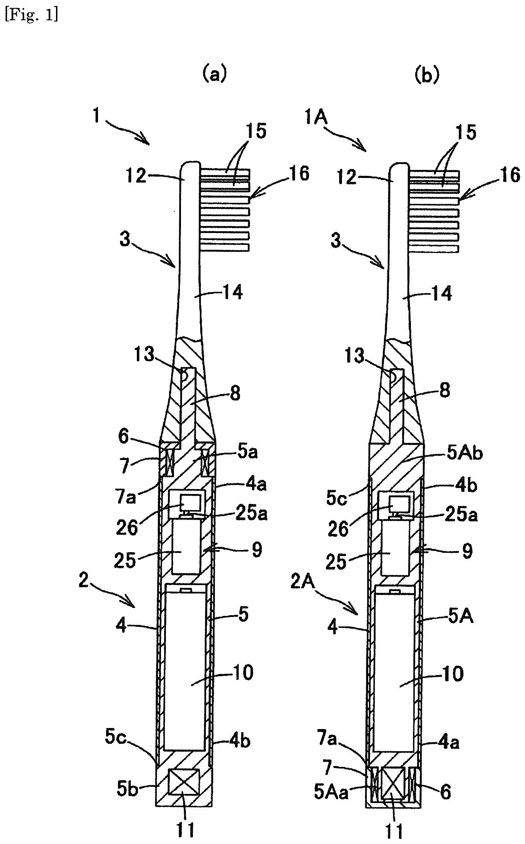

As illustrated in Fig. 1(a), a first electrically driven toothbrush 1 is an electrically driven toothbrush in which a replacement brush 3 is detachably attached to a handle part 2 as a handle. The handle part 2 includes: a metallic cylindrical exterior case 4 that has a first end portion 4a and a second end portion 4b; an interior member 5 that has a small end portion 5a inserted into the first end portion 4a and a large end portion 5b locked at the second end portion 4b, and is installed in the exterior case 4 by inserting the small end portion 5a of the interior member 5 into the exterior case 4 from the second end portion 4b side; and a restriction member 7 that is fitted and fixed onto the small end portion 5a protruding outward from the first end portion 4a via a coupling structure 6 and is engaged with the first end portion 4a of the exterior case 4 to restrict falling of the exterior case 4 from the interior member 5 in conjunction with the large end portion 5b.

In the electrically driven toothbrush 1, an attachment shaft 8 for detachably attaching the replacement brush 3 is provided at the small end portion 5a of the interior member 5 in such a manner as to protrude outward from the exterior case 4, a vibration generation means 9 is assembled into the small end portion 5a side of the interior member 5, a battery 10 for power feeding to the vibration generation means 9 is assembled into the length-direction middle part of the interior member 5, and an induction coil 11 for electric charging is assembled into the large end portion 5b of the interior member 5. The induction coil 11 is preferably arranged outside the exterior case 4 so as not to interrupt the magnetic flux. However, the induction coil 11 may be arranged in a direction orthogonal to the length direction of the exterior case 4 and some cutouts or through-holes may be formed in the exterior case 4 at the parts opposed to the opposite poles of the induction coil 11 such that the magnetic flux from the electric charger is not interrupted.

In the electrically driven toothbrush 1, to assemble the interior member 5 into the exterior case 4, the small end portion 5a of the interior member 5 with the attachment shaft 8 is inserted into the exterior case 4 from the second end portion 4b side of the exterior case 4 to install the interior member 5 in the exterior case 4, the restriction member 7 is fitted and fixed onto the small end portion 5a of the interior member 5 protruding outward from the first end portion 4a of the exterior case 4 via the coupling structure 6 for concave-convex fitting or screwing, and the exterior case 4 is held between a step 5c in the large end portion 5b of the interior member 5 and an abutment surface 7a of the restriction member 7 on the exterior case 4 side to integrate the exterior case 4 and the interior member 5.

In the electrically driven toothbrush 1, the attachment shaft 8 is provided on the small end portion 5a side of the interior member 5. Alternatively, the attachment shaft 8 may be provided on the large end portion 5b side. In this case, as with a handle part 2A of an electrically driven toothbrush 1A illustrated in Fig. 1(b), an attachment shaft 8 for detachably attaching the replacement brush 3 is provided and protruded at a large end portion 5Ab of an interior member 5A, a vibration generation means 9 is assembled into the large end portion 5Ab side of the interior member 5A, a battery 10 for power feeding to the vibration generation means 9 is assembled into the length-direction middle part of the interior member 5A, and an induction coil 11 for electric charging is assembled into a small end portion 5Aa of the interior member 5A. To assemble the electrically driven toothbrush 1A, the small end portion 5Aa of the interior member 5A into which the induction coil 11 is assembled is inserted into an exterior case 4 from the second end portion 4b side to install the interior member 5A in the exterior case 4, a restriction member 7 is fitted and fixed onto the small end portion 5Aa of the interior member 5A protruding outward from the first end portion 4a of the exterior case 4 via a coupling structure 6, and the exterior case 4 is held between a step 5c in the large end portion 5Ab of the interior member 5A and an abutment surface 7a of the restriction member 7 on the exterior case 4 side to integrate the exterior case 4 and the interior member 5A.

### (Second electrically driven toothbrush)

Next, an assembly structure of an exterior case 4 and an interior member 5 of a second electrically driven toothbrush 20 will be explained. The same members as those of the first electrically driven toothbrush 1 will be given the same reference signs as those of the first electrically driven toothbrush 1 and descriptions thereof will be omitted. In the following description, only the differences from the first electrically driven toothbrush 1 will be explained.

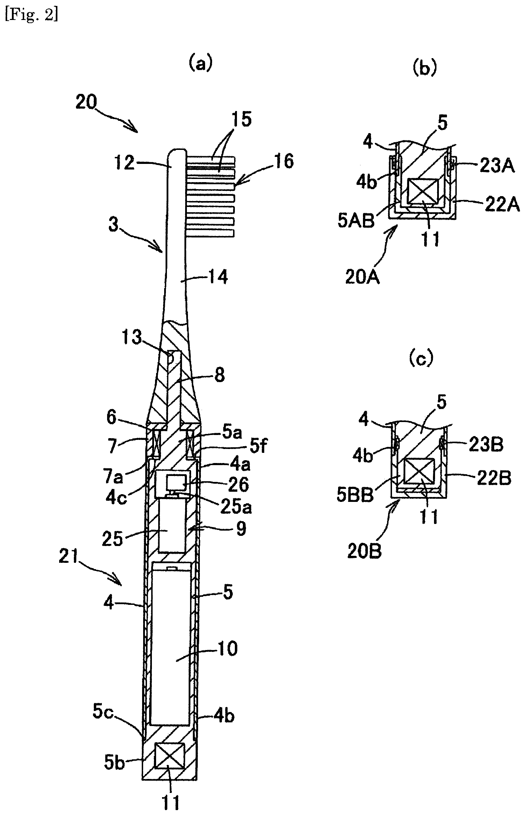

In the handle part 2 of the first electrically driven toothbrush 1, the exterior case 4 is held between the large end portion 5b of the interior member 5 and the restriction member 7 fixed to the small end portion 5a of the interior member 5 to integrate the exterior case 4 and the interior member 5. Alternatively, as with a handle part 21 of the second electrically driven toothbrush 20 illustrated in Fig. 2(a), the exterior case 4 and the interior member 5 may be integrated such that a held portion 4c extending inward is formed at the first end portion 4a of the exterior case 4, a restriction member 7 is fixed to the small end portion 5a via a coupling structure 6, and the held portion 4c is held between the restriction member 7 and a step 5f in the small end portion 5a side of the interior member 5.

In the electrically driven toothbrush 20, to assemble the interior member 5 into the exterior case 4, the small end portion 5a of the interior member 5 with the attachment shaft 8 is inserted into the exterior case 4 from the second end portion 4b side of the exterior case 4 to install the interior member 5 in the exterior case 4, the restriction member 7 is fitted and fixed onto the small end portion 5a of the interior case protruding outward from the first end portion 4a of the exterior case 4 via the coupling structure 6, and the held portion 4c is held between the restriction member 7 fixed to the small end portion 5a and the step 5f in the small end portion 5a side of the interior member 5 to integrate the exterior case 4 and the interior member 5.

As in the electrically driven toothbrush 20 illustrated in Fig. 2(a), the second end portion 4b of the exterior case 4 may be closed by forming a large end portion 5b in the interior member 5 in the same manner as the first electrically driven toothbrush 1. Alternatively, as in an electrically driven toothbrush 20A illustrated in Fig. 2(b), an end portion 5AB of an interior member 5 opposite to a small end portion 5a may be made smaller in diameter than a second end portion 4b of an exterior case 4, and a lid member 22A composed of a separate member may be attached to the second end portion 4b of the exterior case 4 via a coupling structure 23A for screwing, concave-convex fitting, or the like to close the second end portion 4b by the lid member 22A. Alternatively, as in an electrically driven toothbrush 20B illustrated in Fig. 2(c), an end portion 5BB of an interior member 5 opposite to a small end portion 5a may be made smaller in diameter than a second end portion 4b of an exterior case 4, a lid member 22B composed of a separate member may be attached to an end portion 5Bb via a coupling structure 23B for screwing, concave-convex fitting, or the like to close the second end portion 4b by the lid member 22B.

### (Components)

Next, components of the electrically driven toothbrush 1, 1A, 20, 20A, or 20B will be described.

The replacement brush 3 is configured in a known manner to have an implant base 12 formed at the upper end portion, a synthetic resin stem 14 at the lower end portion with an attachment hole 13 detachably fitted onto the attachment shaft 8, and a brush part 16 that is formed by implanting a plurality of bristles 15 into the implant base 12.

The exterior case 4 is preferably composed of a light metallic material such as an aluminum alloy or a magnesium alloy to make the electrically driven toothbrush as lightweight as possible. However, the exterior case 4 is also preferably composed of stainless steel to prevent the occurrence of rust as much as possible. In the case of forming the exterior case 4 from an aluminum alloy, the outer surface is preferably anodized to improve design, abrasion-resistance, and rust resistance. The outer diameter of the exterior case 4 is set to 8 to 18 mm, preferably 8 to 15 mm, further preferably 8 to 12 mm to improve the ease of manual brushing. The wall-thickness of the exterior case 4 is preferably set to 0.1 to 1.0 mm, although depending on the used metallic material, because when the exterior case 4 is formed from an aluminum alloy, for example, a thickness of less than 0.1 mm could not provide sufficient strength and rigidity, whereas a thickness of more than 1.0 mm would increase the outer diameter of the exterior case 4 and make the electrically driven toothbrush heavier. Further, a plurality of dimples for slip resistance is preferably provided on the outer peripheral surface of the exterior case 4. Moreover, the exterior case 4 may be configured to be almost equal in diameter along the entire length, or the exterior case 4 in the electrically driven toothbrush 1, 20, 20A, or 20B may be configured in a tapered cylindrical form with the diameter being smaller with increasing proximity to the attachment shaft 8 side.

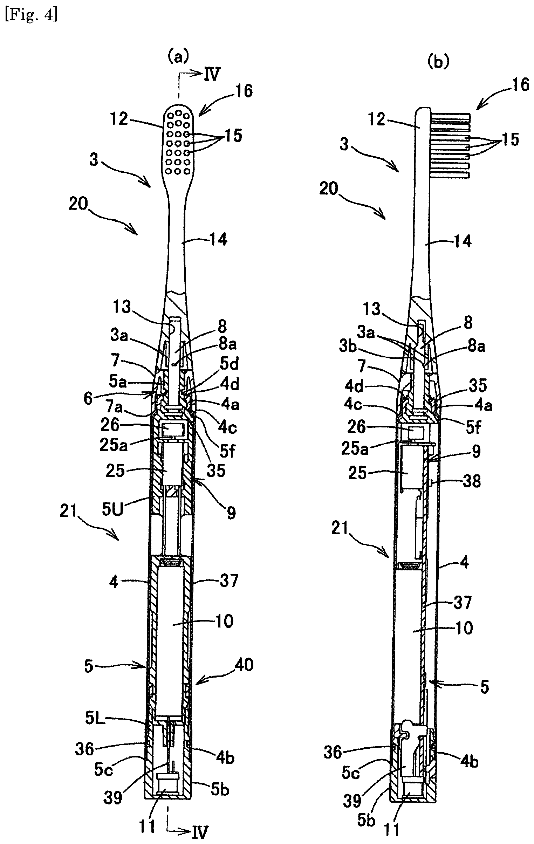

The interior member 5 or 5A may be formed from a synthetic resin material as one component. Alternatively, the interior member 5 or 5A may be composed of a plurality of separate components capable of being integrally coupled. For example, as illustrated in Fig. 4, the interior member 5 or 5A may be configured such that two divided bodies 5U and 5L on the large end portion 5b side and the small end portion 5a side are integrally coupled by a coupling structure 40 for concave-convex fitting or the like.

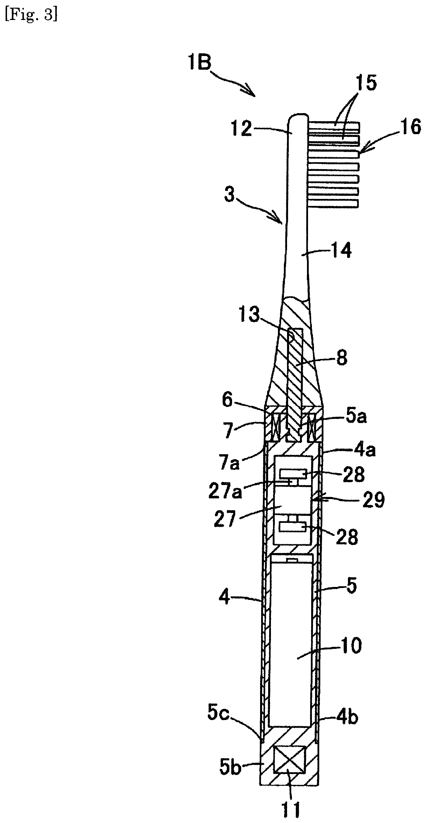

In the electrically driven toothbrush 1, 1A, 20, 20A, or 20B, the attachment shaft 8 is integrally formed with the interior member 5 or 5A. Alternatively, as in an electrically driven toothbrush 1B illustrated in Fig. 3, the attachment shaft 8 may be formed separate from the interior member 5 and integrated in the interior member 5 by insert molding or the like.

In the electrically driven toothbrush 1, 1A, 20, 20A, or 20B, the vibration generation means 9 has a motor 25 and a weight movement 26 fixed to a rotation shaft 25a of the motor 25, and is configured such that the weight movement 26 is eccentrically rotated by the motor 25 to vibrate the interior member 5 or 5A and transfer the vibration to the brush part 16 via the attachment shaft 8 and the stem 14. Alternatively, as in the electrically driven toothbrush 1B illustrated in Fig. 3, a vibration generation means 29 may include a linear actuator 27 that has an output shaft 27a reciprocating in the length direction of the interior member 5 and weight movements 28 that are fixed to the both ends of the output shaft 27a of the linear actuator 27, and may be configured such that the weight movements 28 are linearly reciprocated by the linear actuator 27 to transfer the vibration acting on the interior member 5 to the brush part 16. The vibration generation means 29 makes it possible to assist Bass-method brushing. The weight movements 28 may be provided at the both ends of the output shaft 27a or may be provided only at one of them. Further, the vibration generation means is preferably of a weight-vibration type as the vibration generation means 9 or 29 to make the handle part 2 thin and slim. However, the vibration generation means may be of a linear-motion type, an inversion-motion type, a linear-vibration type, or the like.

A software switch is provided to switch the vibration generation means 9 or 28 between the operational state and the stopped state. The software switch is configured to apply power to the vibration generation means 9 or 28 when manual brushing is detected, and shut off the power distribution to the vibration generation means 9 or 28 when no manual brushing is detected, on the basis of output from the acceleration sensor 38 (see Fig. 4(b)). However, a mechanical power switch for power distribution to the vibration generation means 9 or 28 may be provided at the lower end portion or the side surface of the electrically driven toothbrush.

Used as the battery 10 is a secondary battery such as a nickel-hydride secondary battery or a lithium-ion secondary battery that is configured to be electrically charged by the induction coil 11 when the electrically driven toothbrush is set on an external electric charger. The battery 10 is preferably charged in a non-contact manner with the use of the induction coil 11 to improve the water-tightness of the electrically driven toothbrush. Alternatively, the induction coil 11 may be omitted and the battery 10 may be brought into contact with a power supply terminal and electrically charged when the electrically driven toothbrush is set on the electric charger. In addition, instead of the secondary battery, a primary battery may be used.

According to the first and second electrically driven toothbrushes, the handle part 2 can be made lightweight, thin, and slim as compared to the case where the exterior case 4 is formed from a synthetic resin material. In addition, as the vibration generation means 9 or 28, a relatively low-power and compact weight vibration-type vibration generation means such as a weight rotation vibration type or a weight linear vibration type can be employed to make the handle part 2 of the electrically driven toothbrush still thinner and slimmer to enhance the ease of manual brushing although an electric brushing power is reduced, thereby providing sufficient brushing performance of the electrically driven toothbrush as a whole. Accordingly, it is possible to realize the electrically driven toothbrush that is easy to grip and use, and excellent in brushing performance even for children and women with small hands, and children, elderly people, and sick people with a weak grip or a low physical endurance. In addition, the outer surfaces of the large end portion 5b of the interior member 5 and the restriction member 7 can be made flush with the outer surface of the exterior case 4 so as not to protrude outward in a radial direction beyond the exterior case 4, thereby achieving the electrically driven toothbrush of a neat and excellent design with few irregularities.

### (Specific configuration of the electrically driven toothbrush)

Next, a specific configuration of the second electrically driven toothbrush 20 will be described. In the embodiment, the upper and lower sides of the electrically driven toothbrush 20 will be defined with respect to the state in which the electrically driven toothbrush 20 is vertically oriented with the replacement brush 3 on the upper side.

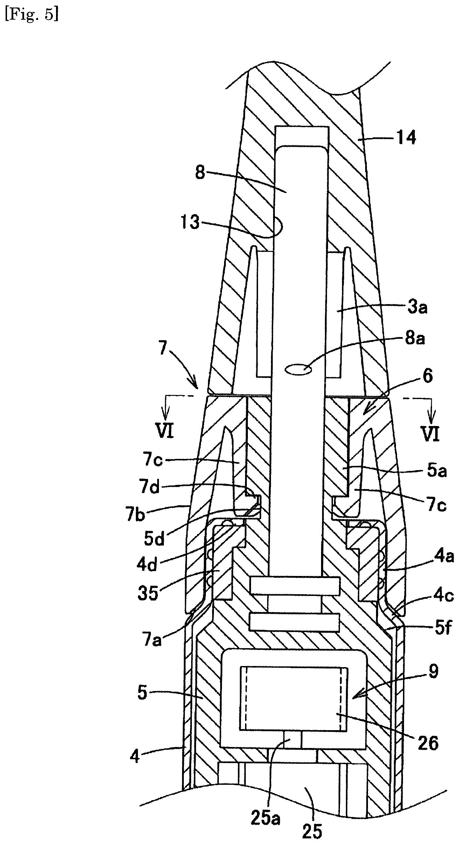

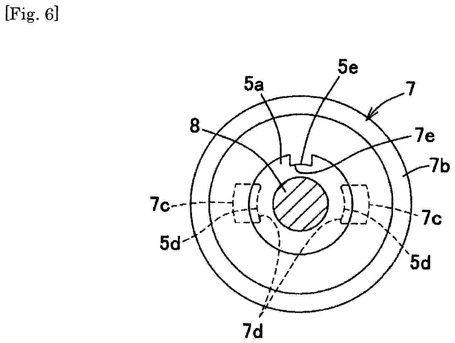

As illustrated in Figs. 4 to 6, the electrically driven toothbrush 20 includes a handle part 21 as a handle and a replacement brush 3 detachably attached to an attachment shaft 8 of the handle part 21. The handle part 21 is made thin and slim to improve ease of manual brushing, and a vibration generation means 9 assembled into the handle part 21 vibrates a brush part 16 of the replacement brush 3 so that manual brushing can be assisted by electric brushing.

The replacement brush 3 is configured in a known manner to have an implant base 12 formed at the upper end portion, a synthetic resin stem 14 at the lower end portion with an attachment hole 13 detachably fitted onto the attachment shaft 8, and the brush part 16 that is formed by implanting a plurality of bristles 15 into the implant base 12.

The replacement brush 3 has a pair of elastically deformable lock pieces 3a constituting an attachment hole 13. The attachment shaft 8 has an engagement groove 8a in the middle part. The replacement brush 3 is detachably configured so as not to readily fall off by the force of brushing due to the engagement between a convex portion 3b provided at the lower end portion of the lock pieces 3a and the engagement groove 8a. However, the attachment structure of the replacement brush 3 to the attachment shaft 8 can be configured in any known manner. For example, the replacement brush 3 can be coupled to the attachment shaft 8 by inserting the attachment shaft 8 into the attachment hole 13 of the replacement brush 3 and then rotating the replacement brush 3 at a specific angle.

The handle part 21 includes a cylindrical exterior case 4 made of an aluminum alloy and an interior member 5 made of a synthetic resin installed in the exterior case 4. The exterior case 4 has a small-diameter first end portion 4a at the upper end portion, a held portion 4c composed of a flange-like step extending inward from the base of the first end portion 4a, and a flange-like restriction portion 4d extending inward from the upper end portion of the first end portion 4a. The interior member 5 has at the upper end portion a cylindrical small end portion 5a to be fitted into the first end portion 4a, and at the lower end portion a large end portion 5b to be locked in the second end portion 4b of the exterior case 4. The interior member 5 is installed in the exterior case 4 by inserting the small end portion 5a into the exterior case 4 from the lower end portion. In this state, the cylindrical restriction member 7 is fitted and fixed onto the small end portion 5a via the coupling structure 6, and the held portion 4c is held between the restriction member 7 and the step 5f in the base of the small end portion 5a, and the exterior case 4 is held between an abutment surface 7a of the restriction member 7 and the step 5c in the large end portion 5b to integrally assemble the interior member 5 into the exterior case 4.

The coupling structure 6 of the restriction member 7 to the first end portion 4a will be described. The restriction member 7 includes a cylindrical cover portion 7b reduced in diameter on the upper end side, a pair of lock claws 7c hung down from the upper end portion of the cover portion 7b toward the inside of the cover portion 7b, and lock convex portions 7d protruding inward from the lower end portions of the lock claws 7c. The small end portion 5a is protruded more upward than the held portion 4c and has a pair of lock concave portions 5d in the height-direction middle part. The restriction member 7 is assembled into the small end portion 5a so as not to readily fall off by concave-convex fitting of the lock convex portions 7d onto the lock concave portions 5d. Reference sign 5e denotes a fitting groove in the small end portion 5a extending in the length direction of the handle part 21, and reference sign 7e denotes a fitting convex portion provided in the restriction member 7. The restriction member 7 is fastened to the small end portion 5a so as not to rotate relative to the small end portion 5a by concave-convex fitting of the fitting convex portion 7e into the fitting groove 5e.

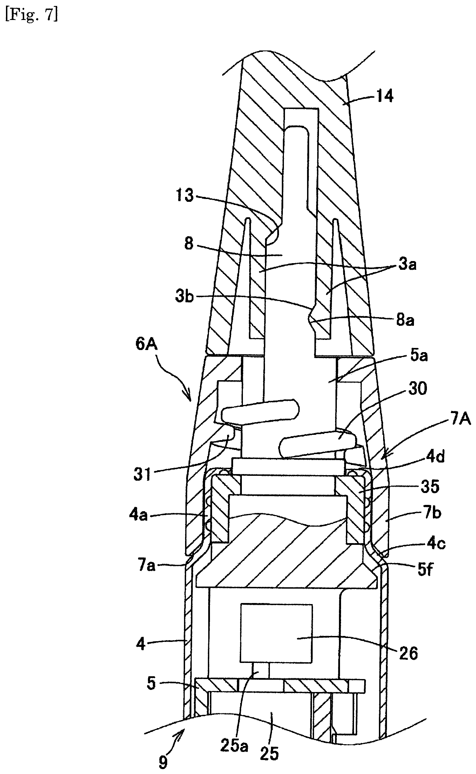

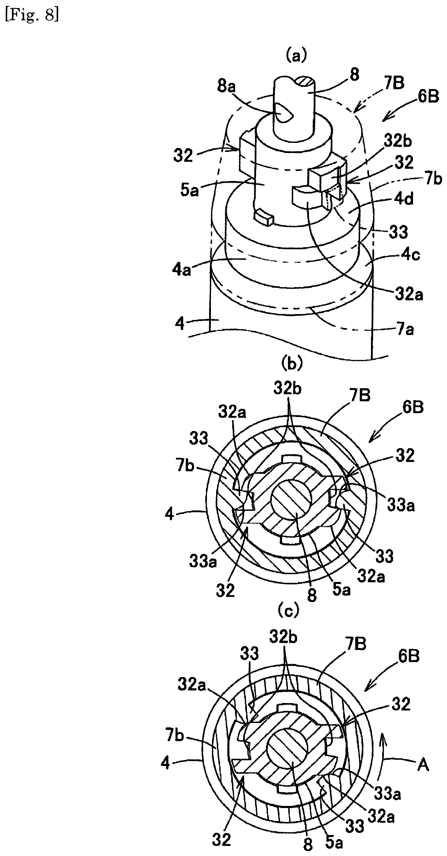

The coupling structure 6 between the restriction member 7 and the small end portion 5a may be configured as a coupling structure 6A illustrated in Fig. 7 such that a male screw portion 30 is formed on the outer peripheral surface of the small end portion 5a instead of the lock concave portions 5d, a restriction member 7A having a female screw portion 31 on the inner peripheral surface of a cover portion 7b is used instead of the restriction member 7, the restriction member 7A is screwed into the small end portion 5a to fix the restriction member 7A to the small end portion 5a. Alternatively, the coupling structure 6 between the restriction member 7 and the small end portion 5a may be preferably configured as a coupling structure 6B illustrated in Fig. 8 such that a pair of downward U-shaped lock portions 32 is protruded from the outer peripheral surface of the small end portion 5a, a restriction member 7B having a pair of lock convex portions 33 on the inner peripheral surface of the cover portion 7b is used instead of the restriction member 7, the restriction member 7B is fitted to the small end portion and is rotated in a direction of arrow A as illustrated in Fig. 8(c) so that arc surfaces 33a of the lock convex portions 33 go over arc surfaces 32a of the lock portions 32 and the lock convex portions 33 are fitted into the concave portions 32b of the lock portions 32 as illustrated in Fig. 8(b), whereby the restriction member 7B can be retained by the lock portions 32.

The interior member 5 is composed of two divided bodies 5U and 5L on the large end portion 5b side and the small end portion 5a side. The divided bodies 5U and 5L are integrally coupled by a coupling structure 40 for concave-convex fitting or the like. An attachment shaft 8 for detachably attaching the replacement brush 3 is integrally provided at the small end portion 5a of the interior member 5 by insert molding, a vibration generation means 9 is assembled into the small end portion 5a side of the interior member 5, a battery 10 for power feeding to the vibration generation means 9 is assembled into the length-direction middle part of the interior member 5, and an induction coil 11 for electric charging is assembled into the large end portion 5b of the interior member 5.

A seal ring 35 is attached between the small end portion 5a of the interior member 5 and the first end portion 4a of the exterior case 4, and a seal ring 36 is attached between the portion of the interior member 5 slightly above the large end portion 5b and the lower end portion of the exterior case 4. Both the seal rings 35 and 36 ensure the water-tightness of the inside of the exterior case 4.

A motor 25 is attached to the upper part of the interior member 5. A battery 10 is assembled into the middle part of the interior member 5. A circuit substrate 37 is attached to the side part of the interior member 5. An induction coil 11 is assembled into the lower part of the interior member 5. The motor 25, the battery 10, the circuit substrate 37, and the induction coil 11 are incorporated together with the interior member 5 into the exterior case 4.

The vibration generation means 9 has the motor 25 and a weight movement 26 fixed to the upper end portion of the rotation shaft 25a of the motor 25. The vibration generation means 9 is configured to eccentrically rotate the weight movement 26 by the motor 25 to vibrate the upper part of the exterior case 4 and transfer the vibration to the brush part 16 via the attachment shaft 8 and the stem 14. Reference sign 39 denotes a battery contact.

The circuit substrate 37 includes a charging circuit that charges the battery 10 by induction current supplied from the induction coil 11, an acceleration sensor 38 that detects movement of the handle part 21 in the length direction of the handle part 21, a control means for controlling power distribution to the motor 25 upon receipt of output from the acceleration sensor 38, and the like. The circuit substrate 37 is configured to activate the vibration generation means 9 when the acceleration sensor 38 detects manual brushing.

The electrically driven toothbrush 20 has the weight vibration-type vibration generation means 9 that can be made compact. In addition, using the metallic exterior case 4 without screw portion enhances the strength and rigidity of the exterior case 4 while reducing the wall-thickness of the exterior case 4, thereby allowing the handle part 21 to be made thin and slim. In this manner, making the handle part 21 thin and slim enhances ease of manual brushing. Accordingly, even when the weight vibration-type vibration generation means 9 with less strong brushing power is used, manual brushing is assisted by electric brushing power to ensure sufficient brushing performance as a whole.

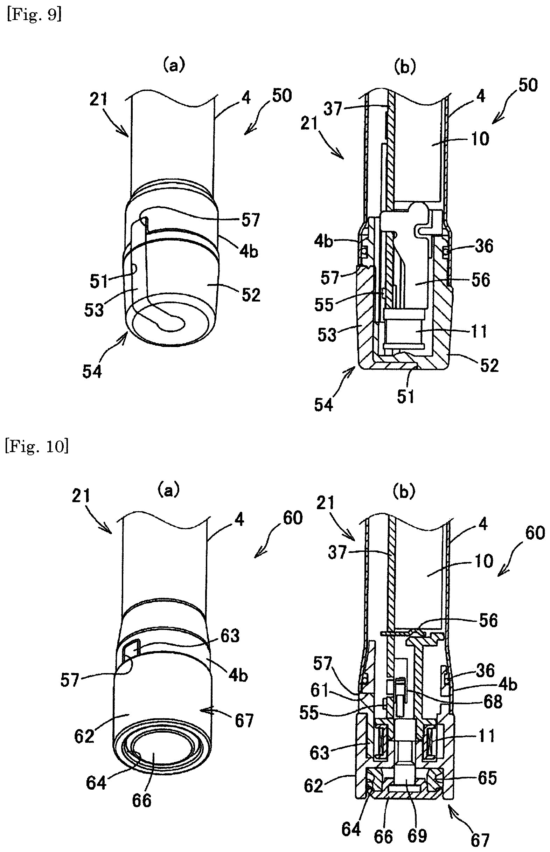

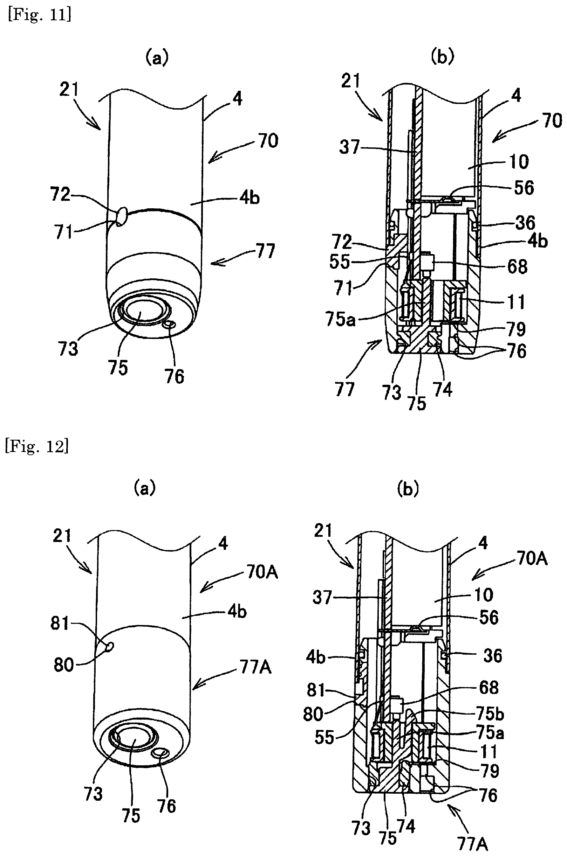

Next, other embodiments in which the lower structure of the electrically driven toothbrush is partly modified will be described. The same members as those of the foregoing embodiment will be given the same reference signs as those of the foregoing embodiment and detailed descriptions thereof will be omitted.
(1) The electrically driven toothbrush 20 may be configured to have a lower structure 50 as illustrated in Fig. 9 that includes: a large end portion 54 having a large end portion main body 52 with an L-shaped cutout portion 51 and a transparent member 53 fitted and fixed to the cutout portion 51, instead of the large end portion 5b; and an LED 55 on a circuit substrate 37 opposed to the transparent member 53 to display the operational states of the electrically driven toothbrush 20 and the electric charger to allow the user to visually check the light-emitting state of the LED 55 through the transparent member 53. The LED 55 may be capable of emitting light in a single color or switchable multiple colors, and may be configured to inform the user of the states of the electrically driven toothbrush 20 and the electric charger. For example, two kinds of LEDs capable of emitting green light and red light may be provided so that the green LED is on when the secondary battery 10 has sufficient battery power, the green LED blinks when the battery power of the secondary battery 10 becomes lower, the green LED is turned off when the battery power of the secondary battery 10 becomes under the final discharge voltage, the red LED is on when the electrically driven toothbrush 20 is set on the electric charger and electrically charged, and when the red LED is turned off in spite of the fact that the electrically driven toothbrush 20 is set on the electric charger, the user is informed that the electric charger may be defective. Reference sign 56 denotes a battery contact connected to the minus pole of the secondary battery 10. Reference sign 57 denotes a cutout portion for rotation stopper formed at the lower end portion of the exterior case 4. When the transparent member 53 is fitted to the cutout portion 57, the relative rotation of the exterior case 4 and the opposed end portion is restricted.
(2) The electrically driven toothbrush 20 may be configured to have a lower structure 60 as illustrated in Fig. 10 that includes: instead of the large end portion 5b, a large end portion 67 having a large end portion main body 62 with a square hole 61 formed in the outer peripheral surface in the height-direction middle part, a transparent member 63 fitted and fixed to the square hole 61, an attachment hole 64 formed in the bottom surface, a seal ring 65 and a press button 66 fitted and attached into the attachment hole 64; an LED 55 on a circuit substrate 37 to display the operational states of the electrically driven toothbrush 20 and the electric charger as in the lower structure 50 to allow the user to visually check the light-emitting state of the LED 55 through the transparent member 63; and a main power switch 68 at the lower end portion of the circuit substrate 37 so that the main power switch 68 can be operated by the press button 66 through the operation member 69 to switch a malfunction preventive function of shutting off power distribution to the acceleration sensor 38 between the on state and the off state. In this case, the same advantageous effects as those of the lower structure 50 can be obtained. In addition, at the transport and storage of the electrically driven toothbrush 20 after shipment or when the user moves by a car or the like carrying the electrically driven toothbrush 20, the malfunction preventive function can be turned on by operating the main power switch 68 through the press button 66 to shut off power distribution to the acceleration sensor 38 or the like. Accordingly, it is possible to reliably prevent the electrically driven toothbrush 20 from malfunctioning due to vibrations acting on the electrically driven toothbrush 20 and prevent decrease in the operation time of the electrically driven toothbrush 20 because no stand-by current is generated. In addition, the main power switch 68 does not need to be operated during use of the electrically driven toothbrush 20, and can be provided at a position that the main power switch 68 cannot be operated while the electrically driven toothbrush 20 is held by hand, that is, at the lower end portion of the handle part 21 as illustrated in Fig. 10, unlike the conventional power switch. This prevents the handle part 21 of the electrically driven toothbrush 20 from becoming thick due to the provision of the main power switch 68. To use the electrically driven toothbrush 20, the press button 66 is pressed again to turn off the malfunction preventive function by the main power switch 68, thereby switching the electrically driven toothbrush 20 to the operational state.
(3) The electrically driven toothbrush 20 may be preferably configured to have a lower structure 70 as illustrated in Fig. 11 that includes: instead of the large end portion 5b, a large end portion 77 having an oval hole 71 formed in the outer peripheral surface in the height-direction middle part, a transparent member 72 fitted and fixed to the oval hole 71, an attachment hole 73 formed in the bottom surface, a seal ring 74 and a press button 75 fitted and attached into the attachment hole 73, and a degassing hole 76 formed in the bottom surface; an LED 55 on a circuit substrate 37 to display the operational states of the electrically driven toothbrush 20 and the electric charger as in the lower structure 60 to allow the user to visually check the light-emitting state of the LED 55 through the transparent member 72; a main power switch 68 at the lower end portion of the circuit substrate 37 so that the main power switch 68 can be operated by the press button 75 through an operation part 75a; and a breathable film 79 impervious to liquid but pervious to gas in the degassing hole 76 at the inner end portion of the exterior case 4 to prevent foreign object such as water from flowing from the outside into the inside of the electrically driven toothbrush 20. In this case, the same advantageous effects as those of the lower structure 60 can be obtained. In addition, even if a gas is generated due to degradation of the secondary battery 10, the gas can be discharged to the outside through the degassing hole 76, thereby preventing the electrically driven toothbrush 20 from bulging, deforming, or breaking. In addition, the electrically driven toothbrush 20 may be configured to have a lower structure 70A as illustrated in Fig. 12 in which a round hole 80 is formed in a large end portion 77A instead of the oval hole 71, a transparent member 81 is fitted and fixed to the round hole 80, and a hook portion 75b for prevention of dropping is provided on a press button 75.

Embodiments of the present invention have been described so far. However, the present invention is not limited to the foregoing embodiments. As a matter of course, the configurations of the embodiments can be modified without deviating from the present invention.

### Reference Signs List

- 1: Electrically driven toothbrush
- 2: Handle part
- 3: Replacement brush
- 3a: Lock piece
- 3b: Convex portion
- 4: Exterior case
- 4a: First end portion
- 4b: Second end portion
- 4c: Held portion
- 4d: Restriction portion
- 5: Interior member
- 5a: Small end portion
- 5b: Large end portion
- 5c: Step
- 5d: Lock concave portion
- 5e: Fitting groove
- 5f: Step
- 5U: Divided body
- 5L: Divided body
- 6: Coupling structure
- 7: Restriction member
- 7a: Abutment surface
- 7b: Cover portion
- 7c: Lock claw
- 7d: Lock convex portion
- 7e: Fitting convex portion
- 8: Attachment shaft
- 8a: Engagement groove
- 9: Vibration generation means
- 10: Battery
- 11: Induction coil
- 12: Implant base
- 13: Attachment hole
- 14: Stem
- 15: Bristle
- 16: Brush part
- 1A: Electrically driven toothbrush
- 2A: Handle part
- 5A: Interior member
- 5Aa: Small end portion
- 5Ab: Large end portion
- 20: Electrically driven toothbrush
- 21: Handle part
- 20A: Electrically driven toothbrush
- 22A: Lid member
- 23A: Coupling structure
- 5AB: End portion
- 20B: Electrically driven toothbrush
- 23B: Lid member
- 23B: Coupling structure
- 5BB: End portion
- 25: Motor
- 25a: Rotation shaft
- 26: Weight movement
- 1B: Electrically driven toothbrush
- 27: Linear actuator
- 27a: Output shaft
- 28: Weight movement
- 29: Vibration generation means
- 6A: Coupling structure
- 7A: Restriction member
- 30: Male screw portion
- 31: Female screw portion
- 6B: Coupling structure
- 7B: Restriction member
- 32: Lock portion
- 32a: Arc surface
- 32b: Concave portion
- 33: Lock convex portion
- 33a: Arc surface
- 35: Seal ring
- 36: Seal ring
- 37: Circuit substrate
- 38: Acceleration sensor
- 39: Battery contact
- 40: Coupling structure
- 50: Lower structure
- 51: Cutout portion
- 52: Large end portion main body
- 53: Transparent member
- 54: Large end portion
- 55: LED
- 56: Battery contact
- 57: Cutout portion
- 60: Lower structure
- 61: Square hole
- 62: Large end portion main body
- 63: Transparent member
- 64: Attachment hole
- 65: Seal ring
- 66: Press button
- 67: Large end portion
- 68: Main power switch
- 69: Operation member
- 70: Lower structure
- 70A: Lower structure
- 71: Oval hole
- 72: Transparent member
- 73: Attachment hole
- 74: Seal ring
- 75: Press button
- 75a: Operation part
- 75b: Hook part
- 76: Degassing hole
- 77: Large end portion
- 77A: Large end portion
- 79: Breathable film
- 80: Round hole
- 81: Transparent member

## Claims

1. An electrically driven toothbrush (1) comprising:
a handle part (2) as a handle; and
a replacement brush (3) detachably attached to the handle part (2), wherein
the handle part (2) includes:
a metallic cylindrical exterior case (4) that has a first end portion (4a) and a second end portion (4b);
an interior member (5) that has a small end portion (5a) inserted into the first end portion (4a) and a large end portion (5b) locked at the second end portion (4b), and is installed in the exterior case (4) by inserting the small end portion (5a) into the exterior case (4) from the second end portion side;
a restriction member (7) that is fitted and fixed onto the small end portion (5a) protruding outward from the first end portion (4a) via a coupling structure (6) and is engaged with the first end portion (4a) of the exterior case (4) to restrict falling of the exterior case (4) from the interior member (5) in conjunction with the large end portion (5b); and
a vibration generation means (9) that is assembled into the interior member (5) to vibrate the replacement brush (3).

2. The electrically driven toothbrush (1) according to claim 1, wherein, as the coupling structure (6), a concave-convex fitting portion is provided between the restriction member (7) and the small end portion.

3. The electrically driven toothbrush (1) according to claim 1, wherein, as the coupling structure (6), a screw portion is provided between the restriction member (7) and the small end portion.

4. The electrically driven toothbrush (1) according to any one of claims 1 to 3, wherein a held portion is formed at the first end portion (4a) of the exterior case (4) in such a manner as to extend inward and is held between the restriction member (7) and the interior member (5).

5. The electrically driven toothbrush (1) according to any one of claims 1 to 4, wherein an attachment shaft (8) for detachably attaching the replacement brush (3) is provided at the small end portion such that an outer surface of the restriction member (7) is continuously connected to an outer surface of the first end portion (4a) of the exterior case (4).

6. The electrically driven toothbrush (1) according to any one of claims 1 to 4, wherein an attachment shaft (8) for detachably attaching the replacement brush (3) is provided at the large end portion such that an outer surface of the large end portion is continuously connected to an outer surface of the second end portion (4b) of the exterior case (4).

7. The electrically driven toothbrush (1) according to claim 5 or 6, wherein an end portion of the interior member (5) opposite to the attachment shaft (8) is formed from a synthetic resin material pervious to magnetic flux, and an induction coil (11) for non-contact electric charging is provided at the opposite end portion.

8. The electrically driven toothbrush (1) according to any one of claims 1 to 7, wherein the vibration generation means (9) includes a weight-type movement and an actuator (27) rotating or reciprocating the weight-type movement.

9. An electrically driven toothbrush (20A) comprising:
a handle part (2) as a handle; and
a replacement brush (3) detachably attached to the handle part (2), wherein
the handle part (2) includes:
a metallic exterior case (4) that has a first end portion (4a) and a second end portion (4b) and has a held portion (4c) extending inward at the first end portion (4a);
an interior member (5) that has a small end portion (5a) inserted into the first end portion (4a) and is installed in the exterior case (4) by inserting the small end portion (5a) into the exterior case (4) from the second end portion side;
a restriction member (7) that is fitted and fixed onto the small end portion (5a) protruding outward from the first end portion (4a) via a coupling structure (6) and holds the held portion (4c) of the first end portion (4a) extending between the restriction member (7) and the interior member (5) to restrict falling of the exterior case (4) from the interior member (5);
a vibration generation means (9) that is assembled into the interior member (5) to vibrate the replacement brush (3);
an attachment shaft (8) that is provided at the small end portion (5a) to detachably attach the replacement brush (3); and
a lid member (22A) that closes the second end portion (4b).

## Patentansprüche

1. Elektrisch angetriebene Zahnbürste (1), die aufweist:
ein Handstück (2) als Halter, und
eine Austauschbürste (3), die lösbar am Handstück (2) befestigt ist, wobei das Handstück (2) aufweist:
ein metallisches zylindrisches Außengehäuse (4), das einen ersten Endabschnitt (4a) und einen zweiten Endabschnitt (4b) aufweist;
ein Innenelement (5), das einen in den ersten Endabschnitt (4a) eingesetzten kleinen Endabschnitt (5a) und einen am zweiten Endabschnitt (4b) verrasteten großen Endabschnitt (5b) aufweist und das im Außengehäuse (4) angeordnet ist, indem der kleine Endabschnitt (5a) von der Seite des zweiten Endabschnitts her in das Außengehäuse (4) eingesetzt wird;
ein Verengungselement (7), das am kleinen Endabschnitt (5a), der vom ersten Endabschnitt (4a) nach außen vorsteht, mithilfe einer Kopplungsstruktur (6) angeordnet und befestigt ist und mit dem ersten Endabschnitt (4a) des Außengehäuses (4) in Eingriff steht, um zusammen mit dem großen Endabschnitt (5b) zu verhindern, dass das Außengehäuse (4) vom Innenelement (5) fällt; und
eine Vibrationserzeugungseinrichtung (9), die im Innenelement (5) befestigt ist, um die Austauschbürste (3) zu vibrieren.

2. Elektrisch angetriebene Zahnbürste (1) nach Anspruch 1, wobei als Kopplungsstruktur (6) ein konkav-konvexer Befestigungsabschnitt zwischen dem Verengungselement (7) und dem kleinen Endabschnitt vorgesehen ist.

3. Elektrisch angetriebene Zahnbürste (1) nach Anspruch 1, wobei als Kopplungsstruktur (6) ein Schraubabschnitt zwischen dem Verengungselement (7) und dem kleinen Endabschnitt vorgesehen ist.

4. Elektrisch angetriebene Zahnbürste (1) nach einem der Ansprüche 1 bis 3, wobei ein Halteabschnitt am ersten Endabschnitt (4a) des Außengehäuses (4) so gebildet ist, dass er sich einwärts erstreckt und zwischen dem Verengungselement (7) und dem Innenelement (5) gehalten wird.

5. Elektrisch angetriebene Zahnbürste (1) nach einem der Ansprüche 1 bis 4, wobei ein Befestigungsschaft (8) zum lösbaren Befestigen der Austauschbürste (3) so am kleinen Endabschnitt vorgesehen ist, dass eine Außenfläche des Verengungselements (7) durchgehend mit einer Außenfläche des ersten Endabschnitts (4a) des Außengehäuses (4) verbunden ist.

6. Elektrisch angetriebene Zahnbürste (1) nach einem der Ansprüche 1 bis 4, wobei ein Befestigungsschaft (8) zum lösbaren Befestigen der Austauschbürste (3) so am großen Endabschnitt vorgesehen ist, dass eine Außenfläche des großen Endabschnitts durchgehend mit einer Außenfläche des zweiten Endabschnitts (4b) des Außengehäuses (4) verbunden ist.

7. Elektrisch angetriebene Zahnbürste (1) nach Anspruch 5 oder 6, wobei ein Endabschnitt des Innenelements (5) gegenüber dem Befestigungsschaft (8) aus einem für Magnetfluss durchlässigen synthetischen Harzmaterial gebildet ist, und eine Induktionsspule (11) zum kontaktlosen elektrischen Aufladen am gegenüberliegenden Endabschnitt vorgesehen ist.

8. Elektrisch angetriebene Zahnbürste (1) nach einem der Ansprüche 1 bis 7, wobei die Vibrationserzeugungseinrichtung (9) einen Antrieb vom Gewichtstyp und ein Stellglied (27) aufweist, das den Antrieb vom Gewichtstyp dreht oder hin- und herbewegt.

9. Elektrisch angetriebene Zahnbürste (20A), die aufweist:
ein Handstück (2) als Halter, und
eine Austauschbürste (3), die lösbar am Handstück (2) befestigt ist, wobei das Handstück (2) aufweist:
ein metallisches Außengehäuse (4), das einen ersten Endabschnitt (4a) und einen zweiten Endabschnitt (4b) aufweist und das einen Halteabschnitt (4c) aufweist, der sich am ersten Endabschnitt (4a) einwärts erstreckt;
ein Innenelement (5), das einen in den ersten Endabschnitt (4a) eingesetzten kleinen Endabschnitt (5a) aufweist und das im Außengehäuse (4) angeordnet ist, indem der kleine Endabschnitt (5a) von der Seite des zweiten Endabschnitts her in das Außengehäuse (4) eingesetzt wird;
ein Verengungselement (7), das am kleinen Endabschnitt (5a), der vom ersten Endabschnitt (4a) nach außen vorsteht, mithilfe einer Kopplungsstruktur (6) angeordnet und befestigt ist und den Halteabschnitt (4c) des ersten Endabschnitts (4a) hält, der sich zwischen dem Verengungselement (7) und dem Innenelement (5) erstreckt, um zu verhindern, dass das Außengehäuse (4) vom Innenelement (5) fällt;
eine Vibrationserzeugungseinrichtung (9), die im Innenelement (5) befestigt ist, um die Austauschbürste (3) zu vibrieren;
einen Befestigungsschaft (8), der am kleinen Endabschnitt (5a) vorgesehen ist, um die Austauschbürste (3) lösbar zu befestigen; und
ein Deckelelement (22A), das den zweiten Endabschnitt (4b) verschließt.

## Revendications

1. Brosse à dents électrique (1) comprenant :
une partie manche (2) en tant que manche ; et
une brosse de remplacement (3) fixée de manière amovible à la partie manche (2), dans laquelle
la partie manche (2) comprend :
un boîtier extérieur cylindrique métallique (4) qui comporte une première portion d'extrémité (4a) et une deuxième portion d'extrémité (4b) ;
un organe intérieur (5) qui comporte une portion de petite extrémité (5a) insérée dans la première portion d'extrémité (4a) et une portion de grande extrémité (5b) verrouillée au niveau de la deuxième portion d'extrémité (4b), et est installé dans le boîtier extérieur (4) en insérant la portion de petite extrémité (5a) dans le boîtier extérieur (4) depuis le côté de deuxième portion d'extrémité ;
un organe de limitation (7) qui est ajusté et fixé sur la portion de petite extrémité (5a) faisant saillie vers l'extérieur depuis la première portion d'extrémité (4a) via une structure d'accouplement (6) et est engagé avec la première portion d'extrémité (4a) du boîtier extérieur (4) pour limiter une chute du boîtier extérieur (4) depuis l'organe intérieur (5) conjointement à la portion de grande extrémité (5b) ; et
un moyen de génération de vibrations (9) qui est assemblé dans l'organe intérieur (5) pour faire vibrer la brosse de remplacement (3).

2. Brosse à dents électrique (1) selon la revendication 1, dans laquelle, en tant que structure d'accouplement (6), une portion d'ajustement concavo-convexe est prévue entre l'organe de limitation (7) et la portion de petite extrémité.

3. Brosse à dents électrique (1) selon la revendication 1, dans laquelle, en tant que structure d'accouplement (6), une portion de vis est prévue entre l'organe de limitation (7) et la portion de petite extrémité.

4. Brosse à dents électrique (1) selon l'une quelconque des revendications 1 à 3, dans laquelle une portion maintenue est formée au niveau de la première portion d'extrémité (4a) du boîtier extérieur (4) de manière à s'étendre vers l'intérieur et est maintenue entre l'organe de limitation (7) et l'organe intérieur (5).

5. Brosse à dents électrique (1) selon l'une quelconque des revendications 1 à 4, dans laquelle une tige de fixation (8) pour fixer de façon amovible la brosse de remplacement (3) est prévue au niveau de la portion de petite extrémité de sorte qu'une surface extérieure de l'organe de limitation (7) soit raccordée en continu à une surface extérieure de la première portion d'extrémité (4a) du boîtier extérieur (4).

6. Brosse à dents électrique (1) selon l'une quelconque des revendications 1 à 4, dans laquelle une tige de fixation (8) pour fixer de façon amovible la brosse de remplacement (3) est prévue au niveau de la portion de grande extrémité de sorte qu'une surface extérieure de la portion de grande extrémité soit raccordée en continu à une surface extérieure de la deuxième portion d'extrémité (4b) du boîtier extérieur (4).

7. Brosse à dents électrique (1) selon la revendication 5 ou 6, dans laquelle une portion d'extrémité de l'organe intérieur (5) opposée à la tige de fixation (8) est composée d'un matériau en résine synthétique perméable à un flux magnétique, et une bobine d'induction (11) pour une recharge électrique sans contact est prévue au niveau de la portion d'extrémité opposée.

8. Brosse à dents électrique (1) selon l'une quelconque des revendications 1 à 7, dans laquelle le moyen de génération de vibrations (9) comprend un mouvement de type poids et un actionneur (27) faisant tourner ou animant d'un mouvement de va-et-vient le mouvement de type poids.

9. Brosse à dents électrique (20A) comprenant :
une partie manche (2) en tant que manche ; et
une brosse de remplacement (3) fixée de manière amovible à la partie manche (2), dans laquelle
la partie manche (2) comprend :
un boîtier extérieur métallique (4) qui comporte une première portion d'extrémité (4a) et une deuxième portion d'extrémité (4b) et comporte une portion maintenue (4c) s'étendant vers l'intérieur au niveau de la première portion d'extrémité (4a) ;
un organe intérieur (5) qui comporte une portion de petite extrémité (5a) insérée dans la première portion d'extrémité (4a) et est installé dans le boîtier extérieur (4) en insérant la portion de petite extrémité (5a) dans le boîtier extérieur (4) depuis le côté de deuxième portion d'extrémité ;
un organe de limitation (7) qui est ajusté et fixé sur la portion de petite extrémité (5a) faisant saillie vers l'extérieur depuis la première portion d'extrémité (4a) via une structure d'accouplement (6) et maintient la portion maintenue (4c) de la première portion d'extrémité (4a) s'étendant entre l'organe de limitation (7) et l'organe intérieur (5) pour limiter une chute du boîtier extérieur (4) depuis l'organe intérieur (5) ;
un moyen de génération de vibrations (9) qui est assemblé dans l'organe intérieur (5) pour faire vibrer la brosse de remplacement (3) ;
une tige de fixation (8) qui est prévue au niveau de la portion de petite extrémité (5a) pour fixer de façon amovible la brosse de remplacement (3) ; et
un organe couvercle (22A) qui ferme la deuxième portion d'extrémité (4b).
